(19) Europäisches Patentamt

European Patent Office

Office européen des brevets

(11) **EP 0 420 588 B1**

(12) **EUROPEAN PATENT SPECIFICATION**

(45) Date of publication and mention
of the grant of the patent:
**12.07.2000 Bulletin 2000/28**

(51) Int. Cl.[7]: **H04N 1/46**

(21) Application number: **90310499.0**

(22) Date of filing: **25.09.1990**

(54) **Image pickup apparatus**

Bildaufnahmegerät

Dispositif de prise d'images

(84) Designated Contracting States:
**DE FR GB**

(30) Priority: **28.09.1989 JP 25068989**
**17.09.1990 JP 24391190**
**17.09.1990 JP 24391290**

(43) Date of publication of application:
**03.04.1991 Bulletin 1991/14**

(60) Divisional application:
**98200443.4 / 0 855 833**

(73) Proprietor:
**CANON KABUSHIKI KAISHA**
**Tokyo (JP)**

(72) Inventors:
• **Sasaki, Takashi,**
**c/o Canon Kabushiki Kaisha**
**Takatsu-ku, Kawasaki-shi, Kanagawa-ken (JP)**
• **Horiuchi, Izuru,**
**c/o Canon Kabushiki Kaisha**
**Ohta-ku, Tokyo (JP)**

(74) Representative:
**Beresford, Keith Denis Lewis et al**
**BERESFORD & Co.**
**High Holborn**
**2-5 Warwick Court**
**London WC1R 5DJ (GB)**

(56) References cited:
**EP-A- 0 323 194      US-A- 4 580 160**
**US-A- 4 758 883**

• **TELECOMMUNICATIONS & RADIO ENGINEERING vol. 35/36, no. 2, February 1981, SILVER SPRING, MARYLAND, USA pages 41 - 45; L. V. GAVRILOV ET AL.: 'EXPERIMENTAL COLOR FACSIMILE EQUIPMENT USING DIFFERENTIAL PULSE CODE MODULATION'**
• **OPTICAL ENGENEERING vol. 21, no. 2, April 1982, BELLINGHAM, WASHINGTON, USA pages 354 - 358; A. ROBERTS ET AL.: 'CHARGE COUPLED DEVICE (CCD) CAMERA/MEMORY OPTIMIZATION FOR EXPENDABLE AUTONOMOUS VEHICLES'**

**Description**

The present invention relates to an image pickup apparatus such as an electronic still camera.

In recent years, an electronic still camera has been developed which converts an analog signal output from a solid-state image pickup element, such as a CCD (charge coupled device), to a digital data signal and stores the digital data in a detachable semiconductor memory or a rotary floppy disk, thus providing an alternative to cameras using photographic film.

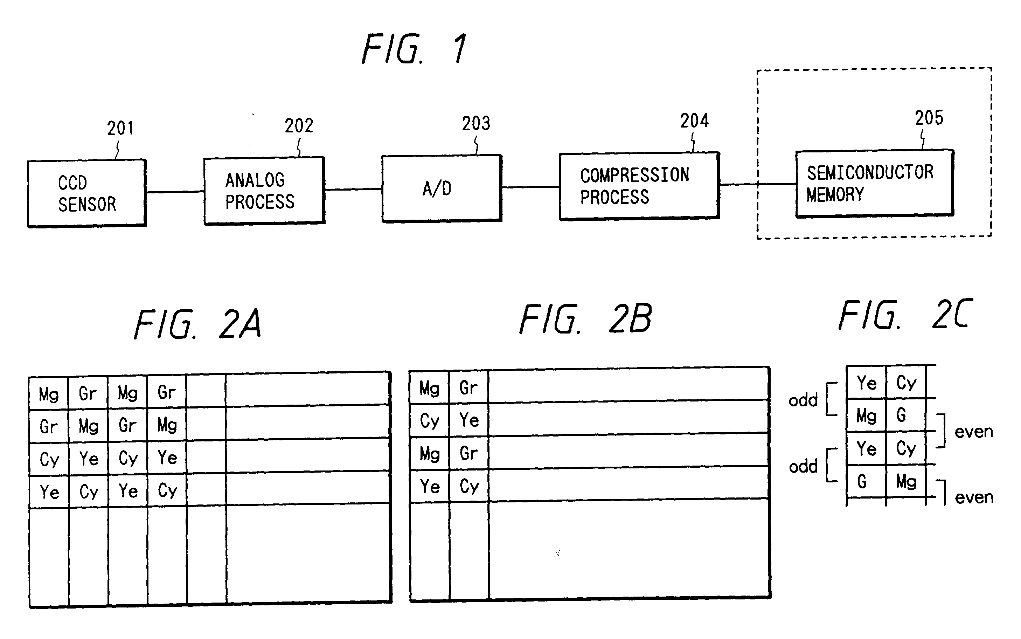

Fig. 1 is a block diagram of this prior art image pickup apparatus. For example, a signal from a CCD sensor 201 which has colour filters such as shown in Figs. 2A to 2C in units of pixels is subjected to, e.g. a CDS (correlated-Double-Sampling) process, a blanking pulse insert process, a preknee process, and the like in an analog process unit 202, and the processed signal is then converted into, e.g. 9-bit digital data by an A/D converter 203.

If this digital data were to be directly stored in a semiconductor memory 205, the capacity per frame would be too large, and the number of images capable of being stored in a single semiconductor memory would be reduced, resulting in an inconvenient electronic still camera.

A compression process unit 204 is normally arranged to compress digital data, and the compressed data is then stored in the semiconductor memory 205. Various compression methods are known. Of these methods, DPCM (differential pulse code modulation) and DCT (discrete cosine transformation) are often adopted.

In an image pickup apparatus such as a colour video camera, colour separation filters attached to a sensor often comprise complementary colour filters rather than pure colour filters.

The complementary colour filters are advantageous in terms of light utilisation ratio, band width, and the like as compared with pure colour filters.

Many sensors having complementary colour filters have been developed mainly for movie cameras. Fig. 2C shows such a filter matrix. In order to obtain a still image for one frame using this sensor, read access is required twice per pixel, and exposure must be executed twice.

United States Patent No. 4,758,883 discloses an image pickup apparatus of the kind described in the preamble of claim 1 attached. In particular, the colour signals are converted from analog to digital form and are sampled so that digital signals corresponding to each respective different colour group are input through, and processed by, a respective one of a corresponding group of differential pulse code modulation processors, before being stored. Notably, this arrangement requires a differential pulse code modulation processor for each colour group.

The present invention is intended to provide an image pickup apparatus employing a DPCM scheme, which can decrease cost, and is easy to design while assuring high precision.

According to the present invention the image pickup apparatus of the kind described in the preamble of claim 1 is characterised in that:

said processing means includes differential encoding means for encoding a differential value between a colour value to be encoded and a feedback value, the colour values to be encoded being arranged to be input serially to said differential encoding means from said solid-state image pickup element; and

said processing means further includes feedback means for producing the feedback value, this representing another colour value which is of the same group of colour signals as the colour value to be encoded among the plurality of colour signals, whereby said processing means is arranged so as to be used in common for each of the plurality of serially input colour signals.

A preferred embodiment of the present invention provides an image pickup apparatus which can obtain a still image using a sensor for a movie camera, and which can decrease the number of bits required for digital processing such as A/D conversion.

Other features of the present invention and its preferred embodiments will be apparent from the following description taken in conjunction with the accompanying drawings of which:

Fig. 1 is a block diagram of a prior art image pickup apparatus;
Figs. 2A to 2C show colour filter matrices of a CCD sensor;
Fig. 3 is a block diagram showing a first embodiment of the present invention; and
Figs. 4A and 4B show vertical stripe colour filters for use in a second embodiment of the present invention.

The preferred embodiments of the present invention will now be described in detail.

(First Embodiment)

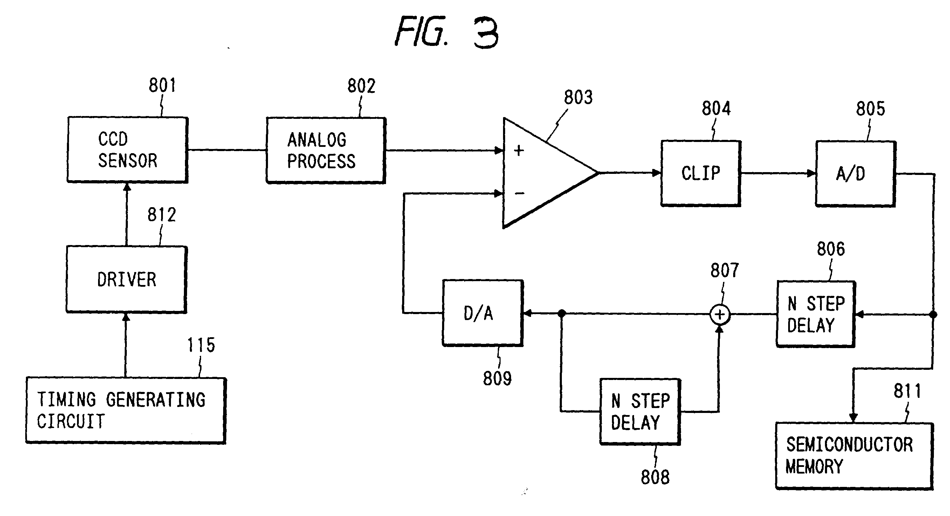

Fig. 3 is a block diagram of an "electronic still camera" according to a first embodiment of the present invention.

This embodiment employs a differential encoding means to be inserted in a feedback loop of a decoder, thus preventing an influence of an error caused by a clip circuit 804 and an A/D converter 805.

Delay times of delays 806 and 808 correspond to clocks for two pixels in the horizontal direction, and it is preferable, as compared to one pixel, since a difference between pixels having a high correlation coefficient in the same colour can be obtained. In addition, since a period in a loop can be twice that for one pixel, a requirement for high arithmetic speed in the loop can be relaxed.

The arrangement shown in fig. 3 will be described below.

A signal read out from a solid-state image pickup element, sensor 801, is subjected to desired video signal processes, such as a CDS process, a clamp process, a blanking process, and the like in an analog process unit 802, and the processed signal is input to a differential amplifier 803 which is arranged to amplify a difference between the output from the analog process unit 802, and a D/A-converted feedback signal corresponding to the same kind of colour filter two pixels before. A clip circuit 804 executes a clip process for suppressing an output to a range of -A/2 to A/2. A non-inverting input to the differential amplifier 803 is represented by $X_n$, and its inverting input is represented by $W_n$. The A/D converter 805 is, e.g. an 8-bit converter, and its output $S_n$ includes a clip error and a quantization error and is given by:

$$S_n = (X_n - W_n) + q_n \qquad (1)$$

Therefore,

$$W_n = S_{n-2} + W_{n-2} \qquad (2)$$

When equations (1) and (2) are Z-converted, we have:

$$\left. \begin{array}{l} S(Z) = X(Z) - W(Z) + Q(Z) \\ W(Z) (1 - X^{-2}) = Z^{-2}S(Z) \end{array} \right\} \qquad (3)$$

When W(Z) is eliminated, the above equations can be rewritten as:

$$S(Z) = (1 - Z{-}2)[X(Z) + Q(Z)] \qquad (4)$$

Therefore, information given by the following equation is written in a semiconductor memory 811:

$$\left. \begin{array}{l} S_n = X_n + Q_n - (X_{n-2} + Q_{n-2}) \\ \phantom{S_n} = (X_n - X_{n-2}) + (Q_n - Q_{n-2}) \end{array} \right\} \qquad (5)$$

The second term is small since it represents a clip error and a quantization error, and almost corresponds to a difference between signals like in the first term. When this value is reproduced by a decoder having the following transfer function:

$$\frac{1}{1 - Z^{-2}} \qquad (6)$$

then the extracted signal is given by:

$$x(Z) + Q(Z) \qquad (7)$$

Therefore, the influence of an error can be prevented, and an original signal can be extracted.

(Second Embodiment)

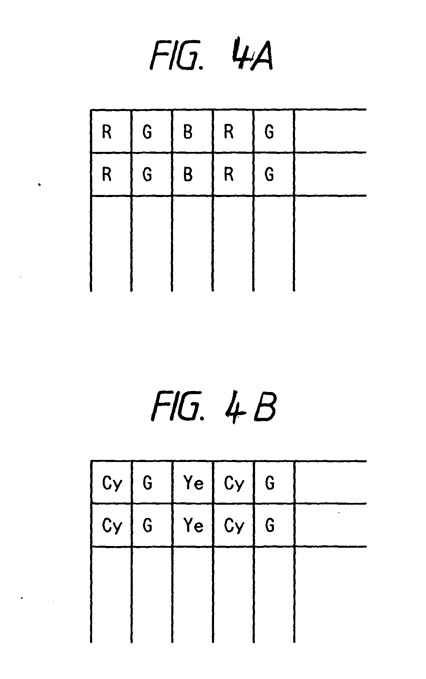

When a sensor provided with vertical stripe colour filters shown in Figs. 4A and 4B is used, the present invention can be effectively carried out with the arrangement shown in Fig. 3.

In this case, delays 806 and 808 can have a delay time corresponding to three horizontal pixels.

In both of the above embodiments, a differential encoding means for quantizing a difference between signals from pixels of the same kind of adjacent colour filters is used. However, the present invention is not limited to this. For example, a difference between signals from horizontally or vertically adjacent pixels may be quantized.

As described above, with reference to the first and second embodiments of the present invention, a difference between signals from adjacent pixels in a solid-state image pickup element is quantized and encoded, and is then recorded in a storage body. Therefore, demodulated image quality free from quantization noise can be obtained without using an A/D converter having high bit precision. If a compression process is not particularly performed, since the output itself of the differential encoding means is already compressed, the number of images which can be stored in the storage body can be increased, resulting in great practical advantages.

In particular, since a correlation between signals from pixels between which a difference is to be calculated is very high, a better result can be obtained.

**Claims**

1. An image pickup apparatus comprising:

   a solid-state image pickup element (801) provided with a plurality of groups of colour filters each group being of a different colour, for inputting a plurality of colour signals of different colours;
   processing means (802-809) for processing the plurality of colour signals obtained by said solid-state image pickup element;
   output means (805) for outputting processed colour signals processed through said processing means; and
   storage means (811) for storing the processed colour signals output from said output means;
   characterised in that:
   said processing means includes differential encoding means (803-805) for encoding a differential value between a colour value to be encoded and a feedback value, the colour values to be encoded being arranged to be input serially to said differential encoding means from said solid-state image pickup element; and
   said processing means further includes feedback means (806-809) for producing the feedback value, this representing another colour value which is of the same group of colour signals as the colour value to be encoded among the plurality of colour signals, whereby said processing means is arranged so as to be used in common for each of the plurality of serially input colour signals.

2. An apparatus according to claim 1, wherein said solid-state image pickup element and said differential encoding means are arranged to co-operate so that the latter shall encode the differential value between values of alternate pixels aligned in a horizontal direction.

3. An apparatus according to either preceding claim, wherein said storage means consists in a memory (811) which is adapted so as to be detachable from said output means (805).

4. An apparatus according to any preceding claim, wherein said groups of colour filters are groups of complementary colour filters (Mg,Gr,Cy,YB).

5. An apparatus according to claim 1 wherein:
   said solid-state image pickup element has said colour filters provided as stripes arranged in cyclic order according to each of three prime colours (R,G,B) or each of a prime colour (G) and two colours (Cy,Ye) complementary to the remaining two prime colours (R,B), and said differential encoding means is arranged to encode time sequentially the serially input colour signals.

**Patentansprüche**

1. Bildaufnahmegerät mit:

   einem Festkörperbildaufnahmeelement (801) zur Eingabe einer Vielzahl von Farbsignalen verschiedener Farben, das mit einer Vielzahl von Gruppen von Farbfiltern versehen ist, wobei jede Gruppe einer unterschiedlichen Farbe entspricht,

einer Verarbeitungseinrichtung (802-809) zur Verarbeitung der Vielzahl der durch das Festkörperbildaufnahmeelement erhaltenen Farbsignale,

einer Ausgabeeinrichtung (805) zur Ausgabe von verarbeiteten Farbsignalen, die infolge der Verarbeitungseinrichtung verarbeitet sind, und

einer Speichereinrichtung (811) zur Speicherung der durch die Ausgabeeinrichtung ausgegebenen verarbeiteten Farbsignale,

**dadurch gekennzeichnet, daß**

die Verarbeitungseinrichtung eine Differenzcodiereinrichtung (803-805) zur Codierung eines Differenzwertes aus einem zu codierenden Farbwert und einem Rückkopplungswert beinhaltet, wobei die zu codierenden Farbwerte zur seriellen Eingabe von dem Festkörperbildaufnahmeelement an die Differenzcodiereinrichtung ausgelegt sind, und

die Verarbeitungseinrichtung ferner eine Rückkopplungseinrichtung (806-809) zur Erzeugung des Rückkopplungswertes beinhaltet, der einen anderen Farbwert darstellt, der unter der Vielzahl der Farbsignale der gleichen Gruppe von Farbsignalen wie der zu codierende Farbwert entspricht, wobei die Verarbeitungseinrichtung derart ausgelegt ist, daß sie für ein jedes aus der Vielzahl der seriell eingegebenen Farbsignale gemeinsam verwendet wird.

2. Gerät nach Anspruch 1, wobei das Festkörperbildaufnahmeelement und die Differenzcodiereinrichtung für ein derartiges Zusammenwirken ausgelegt sind, daß die Letztgenannte den Differenzwert aus Werten von in einer horizontalen Richtung ausgerichteten alternierenden Bildpunkten codieren soll.

3. Gerät nach einem der vorstehenden Ansprüche, wobei die Speichereinrichtung einem Speicher (811) entspricht, der derart ausgelegt ist, von der Ausgabeeinrichtung (805) abnehmbar zu sein.

4. Gerät nach einem der vorstehenden Ansprüche, wobei die Gruppen von Farbtiltern Gruppen von Komplementärfarbfiltern (Mg, Gr, Cy, YB)entsprechen.

5. Gerät nach Anspruch 1, wobei:

das Festkörperbildaufnahmeelement die als Streifen vorgesehenen Farbfilter aufweist, die in zyklischer Reihenfolge gemäß jeder der drei Primärfarben (R, G, B) oder jeder Farbe aus einer Primärfarbe (G) und zwei zu den verbleibenden zwei Primärfarben (R, B) komplementären Farben (Cy, Ye) angeordnet sind, und

die Differenzcodiereinrichtung zur zeitseriellen Codierung der seriell eingegebenen Farbsignale ausgelegt ist.

**Revendications**

1. Appareil de saisie d'image, comprenant :

un élément (801) à semiconducteur de saisie d'image pourvu d'une pluralité de groupes de filtres en couleurs, chaque groupe étant d'une couleur différente, pour introduire une pluralité de signaux de couleur de différentes couleurs ;

un moyen (802 - 809) de traitement pour traiter la pluralité de signaux de couleur obtenus par ledit élément de saisie d'image à semiconducteur ;

un moyen (805) de sortie pour délivrer des signaux traités de couleur, traités par l'intermédiaire dudit moyen de traitement ; et

un moyen (811) de stockage pour stocker les signaux traités de couleur, délivrés par ledit moyen de sortie ; caractérisé en ce que :

ledit moyen de traitement comporte un moyen (803 - 805) de codage différentiel pour coder une valeur différentielle entre une valeur de couleur à coder et une valeur de rétroaction, les valeurs de couleur à coder étant agencées pour être introduites en série dans ledit moyen de codage différentiel à partir dudit élément de saisie d'image à semiconducteur ; et

ledit moyen de traitement comporte en outre un moyen de rétroaction (806 - 809) pour produire la valeur de rétroaction, ceci représentant une autre valeur de couleur qui est du même groupe de signaux de couleur que la valeur de couleur à coder parmi la pluralité de signaux de couleur, à la suite de quoi ledit moyen de traitement est agencé de manière à être utilisé en commun pour chacun de la pluralité de signaux de couleur introduits en série.

2. Appareil selon la revendication 1, dans lequel ledit élément de saisie d'image à semiconducteur et ledit moyen de codage différentiel sont agencés pour coopérer de telle sorte que ce dernier code la valeur différentielle entre des valeurs de pixels alternés alignés dans une direction horizontale.

3. Appareil selon l'une ou l'autre des revendications précédentes, dans lequel ledit moyen de stockage consiste en une mémoire (811) qui est apte à pouvoir être détachée dudit moyen de sortie (805).

4. Appareil selon l'une quelconque des revendications précédentes, dans lequel lesdits groupes de filtres en couleurs sont des groupes de filtres en couleurs complémentaires (Mg, Gr, Cy, YB).

5. Appareil selon la revendication 1, dans lequel :
ledit élément de saisie d'image à semiconducteur comporte lesdits filtres en couleurs disposés sous forme de bandes agencées dans un ordre cyclique en fonction de chacune de trois couleurs primaires (R, G, B) ou de chacune d'une couleur primaire (G) et de deux couleurs (Cy, Ye) complémentaires des deux autres couleurs primaires (R, B), et ledit moyen de codage différentiel est agencé pour coder de manière séquentielle dans le temps les signaux de couleur introduits en série.

# FIG. 1

| 201 | 202 | 203 | 204 | 205 |
|---|---|---|---|---|
| CCD SENSOR | ANALOG PROCESS | A/D | COMPRESSION PROCESS | SEMICONDUCTOR MEMORY |

EP 0 420 588 B1

# FIG. 2A

| Mg | Gr | Mg | Gr | | |
|---|---|---|---|---|---|
| Gr | Mg | Gr | Mg | | |
| Cy | Ye | Cy | Ye | | |
| Ye | Cy | Ye | Cy | | |
| | | | | | |

# FIG. 2B

| Mg | Gr | | |
|---|---|---|---|
| Cy | Ye | | |
| Mg | Gr | | |
| Ye | Cy | | |
| | | | |

# FIG. 2C

| | Ye | Cy | |
|---|---|---|---|
| odd | Mg | G | even |
| | Ye | Cy | |
| odd | G | Mg | even |

## FIG. 3

801 CCD SENSOR

802 ANALOG PROCESS

803 +/−

804 CLIP

805 A/D

812 DRIVER

806 N STEP DELAY

807 +

809 D/A

808 N STEP DELAY

811 SEMICONDUCTOR MEMORY

115 TIMING GENERATING CIRCUIT

## FIG. 4A

| R | G | B | R | G |  |
|---|---|---|---|---|---|
| R | G | B | R | G |  |
|  |  |  |  |  |  |

## FIG. 4B

| Cy | G | Ye | Cy | G |  |
|----|---|----|----|---|---|
| Cy | G | Ye | Cy | G |  |
|  |  |  |  |  |  |